# EUROPEAN PATENT APPLICATION

(11) **EP 2 682 874 A2**
(43) Date of publication of application: **08.01.2014**
(21) Application number: 13174598.6
(22) Date of filing: 02.07.2013
(51) Int. Cl.: G06F 15/02

(54) **List data management device and list data management method**

(30) Priority: 03.07.2012 JP 2012149266
(71) Applicant: Casio Computer Co., Ltd., Tokyo 151-8543 (JP)
(72) Inventor: Kai, Rie, Hamura-shi, Tokyo 205-8555 (JP)
(74) Representative: Grünecker, Kinkeldey, Stockmair & Schwanhäusser

(57) **Abstract**

A list data management device comprising a histogram display control unit (11, 13, 15a, 15e-15g) (S5, SA, A1-A10, S6) which displays a histogram based on list data, an element color setting unit (11) (S7-S10) which designates a display element corresponding to a given class from the histogram displayed by the histogram display control unit and sets a display color of the display element, and a conditional format generating unit (11, 15d) (SB, B1-B3) which generates conditional format data based on the display element and the display color set by the element color setting unit, the conditional format data causing data of the list data, which corresponds to the class of the display element, to be displayed in a display mode using the display color.

## Description

The present invention relates to a list data management device having a function of displaying a histogram on the basis of list data including a plurality of items of numerical data and a method of managing the list data.

Some conventional graphing scientific calculators display a graph or a histogram on the basis of list data.

Histograms make it possible to understand the trend of list data easily.

To improve visual expressions of a calculator, the display of the calculator is colored.

Jpn. Pat. Appln. KOKAI Publication No. 09-179991 discloses a graph display device wherein upon receipt of statistical data of numerical values of x and y data, the minimum to maximum values of the x data are equally reconstructed as statistical data of ten values and a histogram corresponding to the statistical data is drawn.

Jpn. Pat. Appln. KOKAI Publication No. 2011-209910 discloses a graph display device for displaying list data as a histogram. In this device, when a given color is designated for each of the numerical values of the list data, a corresponding histogram element in the histogram is displayed in the designated color, with the result that a correlation between the list data and the histogram can easily be understood.

In spreadsheet software, a numerical value belonging to a numerical value range designated in a given cell of a list is displayed in color. Thus, the spreadsheet software has a function of setting a conditional format for designating the numerical value range and the color.

In the above-described conventional graph display device for displaying list data as a histogram, a histogram element of the histogram can be displayed in color which is set to the numerical value of the list data.

Conversely, when a given color is set to a histogram element of a displayed histogram, it can be set to the numerical value of list data corresponding to the histogram element. In this case, however, no conditional format can be set to the range of a cell in the list data.

The present invention has been made to address the above problem and its object is to provide a list data management device and a list data management method capable of setting a conditional format of list data by setting a given color to a displayed histogram.

A list data management device comprising: a histogram display control unit which displays a histogram based on list data; an element color setting unit which designates a display element corresponding to a given class from the histogram displayed by the histogram display control unit and sets a display color of the display element; and a conditional format setting unit which generates and sets conditional format data based on the display element and the display color set by the element color setting unit, the conditional format data causing data of the list data, which corresponds to the class of the display element, to be displayed in a display mode using the display color.

The list data management device according to the present invention, which displays a histogram based on list data, makes it possible to set a conditional format of the list data in accordance with a color set to a designated element of the histogram.

The invention can be more fully understood from the following detailed description when taken in conjunction with the accompanying drawings, in which:
FIG. 1 is a front view of the appearance of a graphing scientific calculator 10 of a list data management device according to an embodiment of the present invention;
FIG. 2 is a block diagram of the circuit arrangement of the graphing scientific calculator 10;
FIG. 3 is a flowchart of the whole process in a spreadsheet mode which is performed by a CPU 11 of the graphing scientific calculator 10;
FIG. 4 is a flowchart of a histogram generation process in the spreadsheet mode in the graphing scientific calculator 10;
FIG. 5 is a flowchart of a conditional format data generation process in the spreadsheet mode in the graphing scientific calculator 10;
FIG. 6 is a chart showing an example of a list data input screen GT in the spreadsheet mode in the graphing scientific calculator 10;
FIG. 7 is a chart showing a specific example of conditional format data (15d) set to list data in the spreadsheet mode in the graphing scientific calculator 10;
FIG. 8 is a chart showing a specific example of class range data stored in a class range data storage area 15e of a RAM 15 provided in the graphing scientific calculator 10;
FIG. 9 is a chart showing a specific example of frequency data (histogram) which is temporarily stored in a frequency data storage area 15f of the RAM 15 in association with the histogram generation process of the graphing scientific calculator 10;
FIG. 10 is a chart showing a specific example of a histogram display screen GH of a histogram 31 generated in association with the histogram generation process of the graphing scientific calculator 10; and
FIG. 11 is a chart showing a specific example in which the color of a given histogram element is changed to a designated one in the histogram display screen GH of the graphing scientific calculator 10.

An embodiment of the present invention will be described with reference to the accompanying drawings.

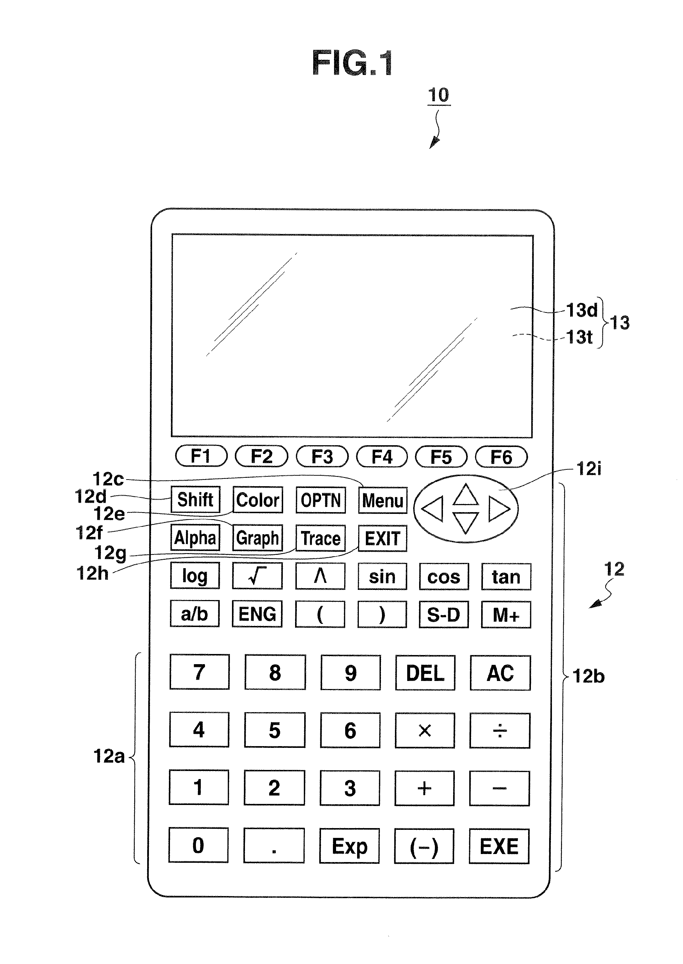

FIG. 1 is a front view of the appearance of a graphing scientific calculator 10 of a list data management device according to the embodiment of the present invention.

The graphing scientific calculator 10 has a function of drawing and displaying graphs corresponding to an input function expression and list data (list data and statistical data).

The body of the graphing scientific calculator 10 includes a key input section 12 in its lower about two-thirds part and a touchpanel display section 13 in its upper about one-third part.

The key input section 12 includes number and symbol keys 12a, function and operator keys 12b, a Menu key 12c, a shift key 12d, a Color key 12e, a Graph key 12f, a Trace key 12g, an Exit key 12h, cursor keys ↑, ↓, ← and →) 12i, function keys F1 to F6 and the like.

The number and symbol keys 12a are a number and symbol input key group including a plurality of keys indicative of numbers and symbols.

The function and operator keys 12b include different functional symbol keys and operator keys such as +, -, ÷ and = which are operated when operation expressions and function expressions are input.

The Menu key 12c is operated to display a menu for selecting and setting one of different operating modes. The operating modes include a calculation mode in which a calculation operation is performed by inputting a given calculation formula such as a four-function calculation formula and a function calculation formula, a graph mode in which a graph is drawn to correspond to an input function expression, a spreadsheet mode in which a spreadsheet operation is carried out and a program mode in which a given program is input to perform its corresponding computation process.

The shift key 12d is operated in combination with the keys provided on the upper left part of the key input section 12 to designate and input different symbols and functions.

The Color key 12e is operated to designate a given color for input data and a graph.

The Graph key 12f is operated to draw a given graph on the basis of input data.

The Trace key 12g is operated to set a trace mode for tracing a graph displayed on the screen.

The Exit key 12h is a key for exiting from the current status.

The cursor keys (↑, ↓, ← and →) 12i are operated to select displayed data, perform a scroll operation, move a cursor and the like.

The function keys F1 to F6 are operated to select different selection menus displayed along the lower end of the screen of the touchpanel display section 13 in accordance with the operating modes.

The touchpanel display section 13 includes a transparent touchpanel 13t formed on a color liquid crystal display screen 13d having a display range of 186 dots in longitudinal direction and 378 dots in horizontal direction, for example.

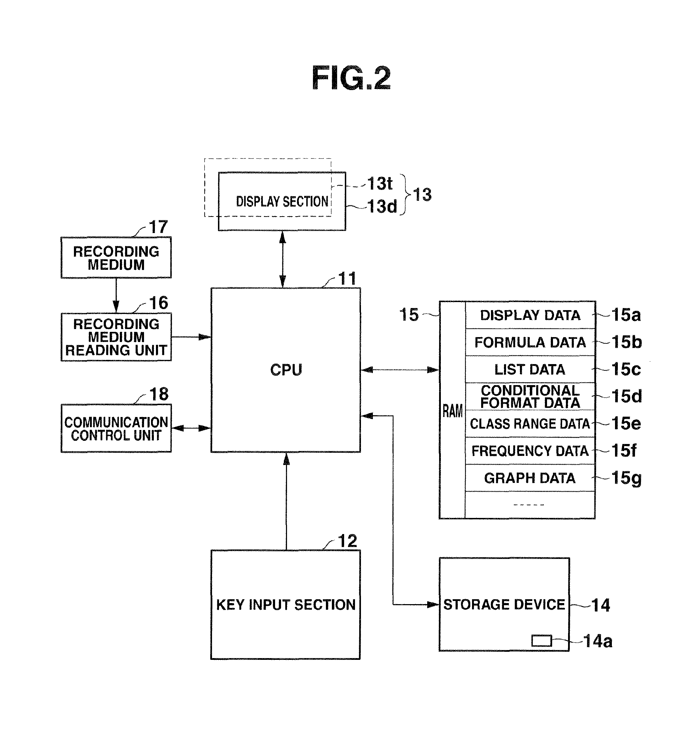

FIG. 2 is a block diagram of the circuit arrangement of the graphing scientific calculator 10.

The graphing scientific calculator 10 includes a microcomputer, namely, a CPU 11.

The CPU 11 activates a program to operate each of the sections of the graphing scientific calculator 10 and perform the functions of the calculator 10, such as a calculator function and a functional graph display function. The CPU 11 is connected to a storage device 14, a RAM 15, a recording medium reading unit 16 and a communication control unit 18 as well as the key input section 12 and the touchpanel display section 13 shown in FIG. 1.

The storage device 14 includes a memory device such as a ROM to store different data items and programs as well as a calculator control program 14a for achieving the present invention.

The RAM 15 stores different data items necessary for the operation of the CPU 11. The RAM 15 includes not only a display data storage area 15a in which data displayed in color on the screen of the display section 13 is expanded, but also a formula data storage area 15b, a list data storage area 15c, a conditional format data storage area 15d, a class range data storage area 15e, a frequency data storage area 15f and a graph data storage area 15g.

The formula data storage area 15b stores data about a function expression input by the operation of the key input section 12.

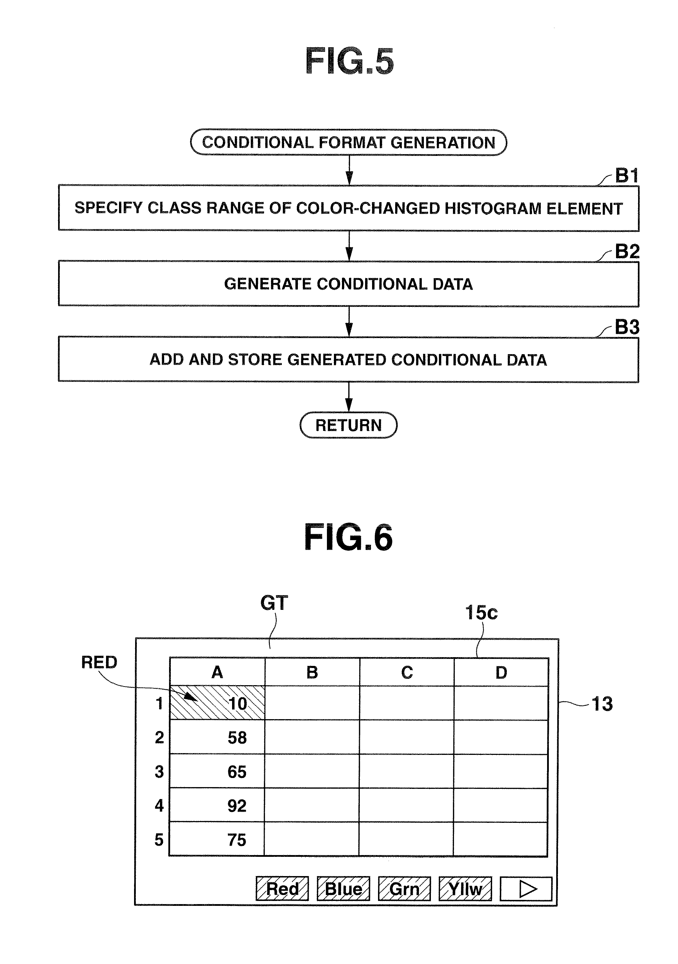

The list data storage area 15c stores list data formed according to the list data input screen GT (FIG. 6) in the spreadsheet mode.

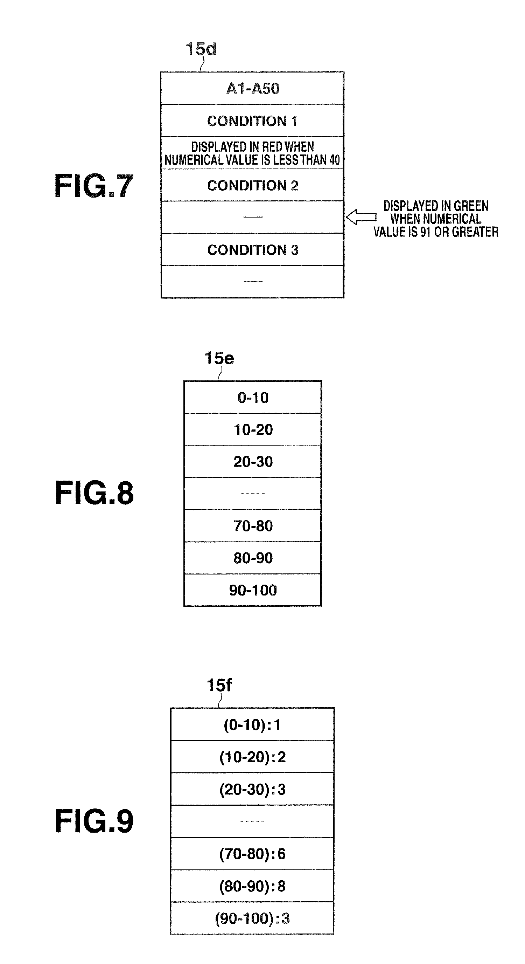

The conditional format data storage area 15d stores conditional format data (FIG. 7) which is set to the list data to correspond to a cell having a range designated by a user. In the specific example of FIG. 7, a conditional format [condition 1: data is displayed in red when the numerical value is less than 40] is set to correspond to the cell [A1-A50] of the list data. As the display mode of the conditional format data, the color of a character itself can be determined or the background color of the cell can be determined.

The class range data storage area 15e stores range data for dividing the list data stored in the list data storage area 15c into the classes corresponding to the numerical data of the list data (FIG. 8). For example, data for dividing the list data into ten classes corresponding to the numerical data of the list data is stored in the area 15e by a user as a first-class range (0 to approaching 10), a second-class range (10 to approaching 20), ... , and a tenth-class range (90 to approaching 100).

The number of data items (frequency) of the numerical data of the list data (FIG. 6) stored in the list data storage area 15c is counted for each of the class ranges (FIG. 8). The frequency data storage area 15f stores the counted number as histogram data (FIG. 9).

The graph data storage area 15g stores data about a graph (including a histogram) created on the basis of function expression data or list data.

The recording medium reading unit 16 reads data out of a recording medium 17. For example, a memory card is used as the recording medium 17, and programs and images are stored therein.

The communication control unit 18 carries out data communications with an external terminal connected thereto via a Universal Serial Bus (USB) not shown or data communications with an external terminal, which is connected thereto wirelessly, via a predetermined communication line.

The graphing scientific calculator 10 with the above configuration has a function of displaying the list data (FIG. 6) stored in the list data storage area 15c as a list data input screen GT in the format according to the conditional format data (FIG. 7) stored in the conditional format data storage area 15d.

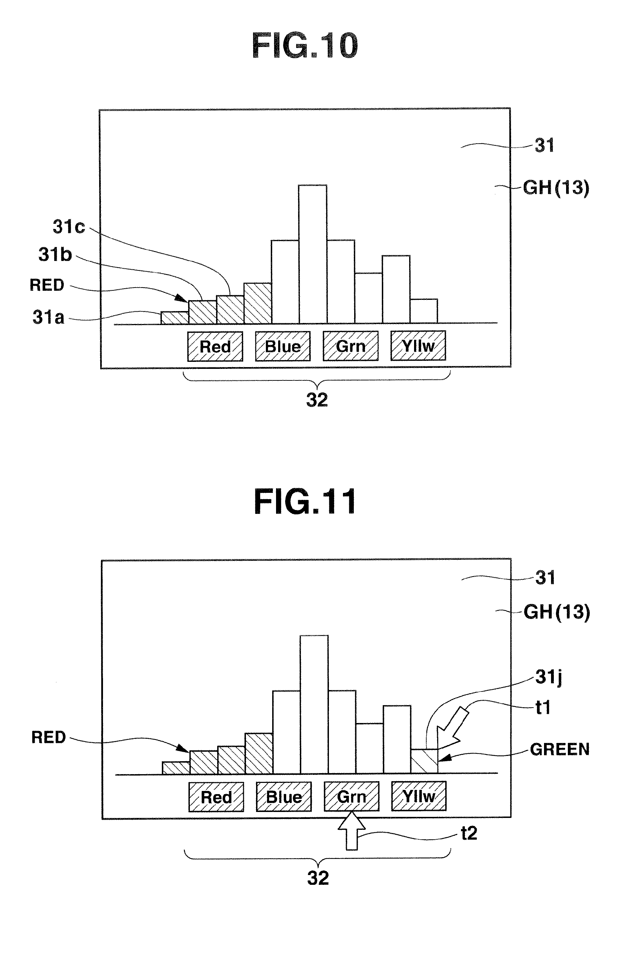

The calculator 10 also has a function of displaying a histogram display screen GH (FIG. 10) in the display mode corresponding to the conditional format data (FIG. 7) stored in the conditional format data storage area 15d when the list data (FIG. 6) is graphed as a histogram (FIG. 9) corresponding to the class range data (FIG. 8).

The calculator 10 also has a function of generating a conditional format that corresponds to a histogram element (class) and its corresponding color (FIG. 11) which are designated in the histogram display screen GH in the display mode corresponding to the conditional format data (FIG. 7), and adding the generated conditional format to the conditional format data.

The graphing scientific calculator 10 fulfills the above functions as described below by causing the CPU 11 to control the operations of various parts of the circuitry according to different instructions written in the calculator control program 14a and by causing software and hardware to cooperate with each other.

An operation of the graphing scientific calculator 10 with the above configuration will be described.

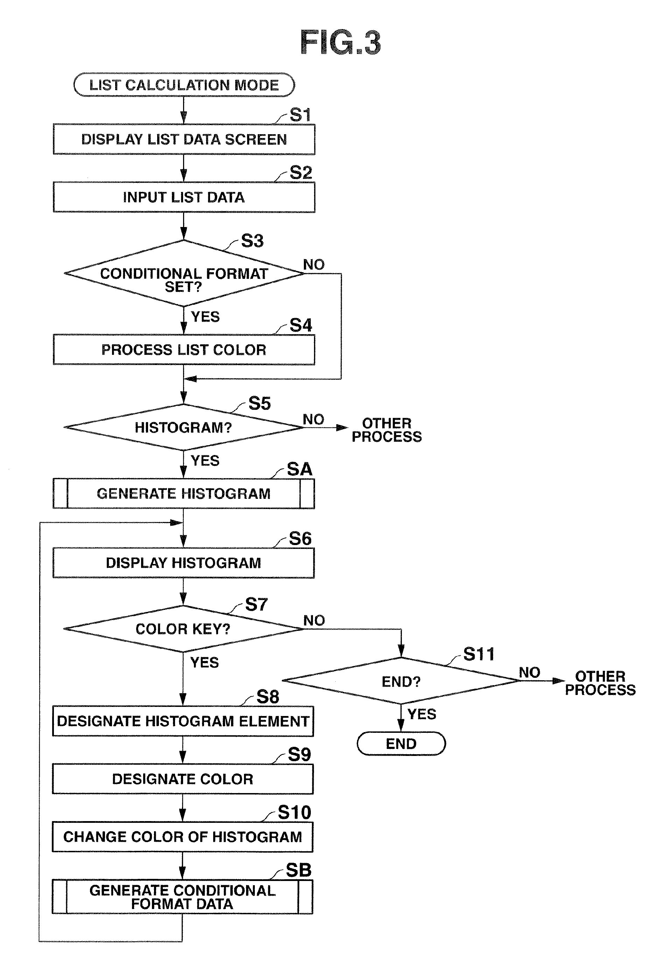

FIG. 3 is a flowchart of the whole process in a spreadsheet mode which is performed by the CPU 11 of the graphing scientific calculator 10.

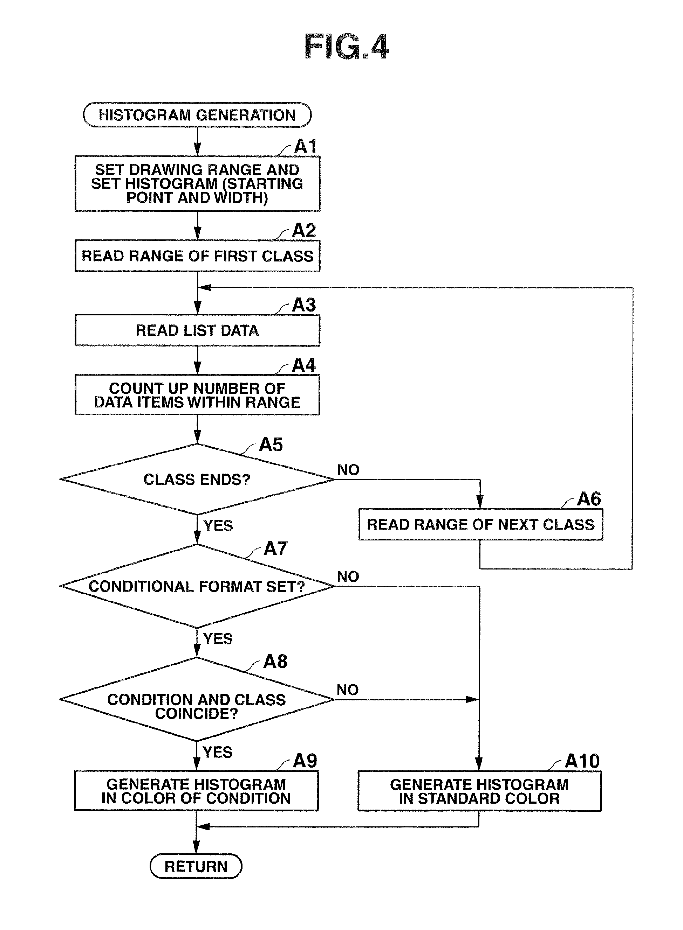

FIG. 4 is a flowchart of a histogram generation process associated with a histogram display process in the spreadsheet mode in the graphing scientific calculator 10.

FIG. 5 is a flowchart of a conditional format data generation process associated with a histogram display process in the spreadsheet mode in the graphing scientific calculator 10.

### (Data Input)

FIG. 6 is a chart showing an example of a list data input screen GT associated with the whole process in the spreadsheet mode in the graphing scientific calculator 10.

First, a user operates the Menu key 12c provided in the key input section 12 of the graphing scientific calculator 10 to set a spreadsheet mode. Under the control of the CPU 11, the display section 13 displays a list data input screen GT as shown in FIG. 6 (step S1).

The list data input screen GT includes a list of a plurality of cells. When the user operates the number and symbol keys 12a of the key input section 12 to input numerical data to its corresponding cell of the list, list data (15c) including the numerical data is formed (step S2). The following description will be given as an example in which 50 students' scores on a test are stored in cells A1-A50.

FIG. 7 is a chart showing a specific example of conditional format data (15d) set to the list data.

It is determined whether a conditional format corresponding to the currently displayed list data (15c) is set to the conditional format data storage area 15d (step S3).

If it is determined that a conditional format (target cells: A1-A50, condition 1: data is displayed in red when the numerical value is less than 40) is set to the conditional format data storage area 15d to identify the score of lower than 40 as shown in FIG. 7 (YES in step S3), the numerical value 10 input to cell A1 in the list data (15c) is displayed in red, as shown in FIG. 6, in accordance with the conditional format (step S4).

In the specific example of FIG. 6, the hatching indicative of red is added for the sake of convenience because cell A1 cannot be colored due to drawing constraint. Actually, cell A1 is displayed in designated color.

### (Histogram Display based on List Data)

When the Graph key 12f provided in the key input section 12 is operated after list data is formed, graph type selection menus (not shown) indicating graph types such as Scatter, Histogram and Regression are displayed along the lower end of the screen. A user can thus select a given graph type using a function key Fn.

If Histogram is selected (Yes in step S5), the flow goes to the histogram generation process shown in FIG. 4 (step SA).

FIG. 8 is a chart showing a specific example of class range data stored in the class range data storage area 15e of the RAM 15 provided in the graphing scientific calculator 10.

FIG. 9 is a chart showing a specific example of frequency data (histogram) which is temporarily stored in the frequency data storage area 15f of the RAM 15 in association with the histogram generation process of the graphing scientific calculator 10.

FIG. 10 is a chart showing a specific example of the histogram display screen GH of a histogram 31 generated in association with the histogram generation process of the graphing scientific calculator 10.

The histogram 31 includes a plurality of histogram elements 31a, 31b, 31c, ... which correspond to the number of items of numerical data existing in each of the classes. Based on the height of these histogram elements, the numbers of items of numerical data existing in the classes can be compared with one another.

The specific example of FIG. 10 is directed to the list data (15c) shown in FIG. 6, the conditional format data (15d) shown in FIG. 7 and the class range data (15e) shown in FIG. 8. The histogram elements 31a, 31b, 31c, ... are therefore displayed in color under the conditions set by the conditional format data (15d).

When the flow moves to the histogram generation process, a setting screen (not shown) for setting a cell of a drawing range, a numerical value of the starting point and a width (class) of numerical values, which are to be generated as a histogram, is displayed for the list data (15c) input according to the list data input screen GT (FIG. 6). In accordance with the setting screen, for example, the cell of a drawing range is set to A1-A50, the numerical value of the starting point is set to 0 and the width of numerical values is set to 10, and the class range data generated as shown in FIG. 8 is stored in the class range data storage area 15e (step A1).

First, a first class range (short section) 0-10 is read out of the class range data storage area 15e (step A2).

Then, the list data is read out of the list data storage area 15c (step A3). The number (frequency) of items of numerical data within the first class range is counted and stored in the frequency data storage area 15f in the RAM 15 as frequency data (histogram) as shown in FIG. 9 (step A4).

In the specific example of FIG. 9, the number (frequency) of data items in the first class range 0-10 is counted as one.

It is determined whether the process for counting the number (frequency) of items of numerical data for all the class ranges stored in the class range data storage area 15e is completed or not (step A5). If it is determined that the counting process is not completed (No in step A5), the next class, or the second class range (small section) 10-20 is read out (step A6) and the flow returns to step A3.

If it is determined that the counting process is completed (Yes in step A5), it is determined whether a conditional format is set to the drawing range A1-A50 of the list data (15c) targeted at histogram generation (step A7).

If it is determined that a conditional format (target cell: A1-A50, condition 1: data is displayed in red when the numerical value is less than 40) is set to the drawing range A1-A50 of the list data (15c) targeted at histogram generation (Yes in step A7) as shown in FIG. 7, it is determined whether the condition of the conditional format and the class in the frequency data (15f) coincide with each other (step A8).

More specifically, it is determined that the condition (condition 1: the numerical value is less than 40) of the conditional format corresponds to the classes 0-10, 10-20, 20-30 and 30-40 of the class range (Yes in step A8). Thus, a histogram 31 including histogram elements 31a to 31d displayed in a designated color (red) of the condition (condition 1: data is displayed in red when the numerical value is less than 40) is generated and stored in the graph data storage area 15g of the RAM 15 (step A9).

Then, the flow returns to the whole process in the spreadsheet mode. The histogram 31 displayed in the color corresponding to the conditional format stored in the graph data storage area 15g is expanded in the display data storage area 15a and displayed in color on the screen of the touchpanel display section 13 as a histogram display screen GH as shown in FIG. 10 (step S6).

If it is determined in step S7 that no conditional format is set to the drawing range A1-A50 of the list data (15c) targeted at histogram generation (No in step A7) or it is determined in step S8 that the condition of the conditional format and the class in the frequency data (15f) do not coincide with each other (No in step A8), a histogram 31 of histogram elements 31a, 31b, ... displayed in standard color (a white histogram on a black background) is generated and stored in the graph data storage area 15g in the RAM 15 (step A10).

Then, the flow returns to the whole process in the spreadsheet mode. The histogram 31 displayed in standard color stored in the graph data storage area 15g is expanded in the display data storage area 15a and displayed on the screen of the touchpanel display section 13 as a histogram display screen GH (step S6).

In step A8, it is determined that the condition of the conditional format and the class in the frequency data (15f) do not correspond to each other if the numerical value is not greater than 35 and the class ranges are 0-10, 10-20 and 30-40.

### (Change in Color after Display of Histogram)

If the user operates the Color key 12e provided in the input section 12 after the histogram is displayed (Yes in step S7), a selection menu 32 for red (Red), blue (Blue), green (Grn) and yellow (Yllw) is displayed in the lower end portion of the histogram display screen GH to change the color of a given histogram element by the following process.

FIG. 11 is a chart showing a specific example in which the color of a given histogram element is changed to a designated one in the histogram display screen GH of the graphing scientific calculator 10.

First, if the user touches, for example, the rightmost histogram element 31j by touch operation t1 as shown in FIG. 11 in the histogram display screen GH displayed in the touchpanel display section 13 as shown in FIG. 10, histogram element 31j by touch operation t1 is identified and displayed by a blink or the like (step S8).

Then, if the user selects the green (Grn) from the selection menu 32 by touch operation t2 (or F5 key) (step S9), the color of the touched histogram element 31j is changed to the selected green (Grn) (step S10). After that, the flow moves to the conditional format data generation process (step SB).

In the conditional format data generation process, first, the class range 90-100 of histogram element 31j whose color was changed to green in the histogram display screen GH is specified (step B1). In accordance with this class range, a conditional format (the histogram element is displayed in green if the numeric value of the class range is 90 or greater) is generated (step B2). In this case, the upper limit to the numerical value is 100 and thus the condition of the conditional format is that the element is displayed in green if the numeric value of the class range is 90 or greater; however, it can be that the histogram is displayed in green if the numeric value of the class range is 90 to 100.

The generated conditional format is added as the condition (condition 2: a histogram element is displayed in green if the numeric value of the class range is 90 or greater) of a conditional format set in the drawing range A1-A50 of the list data (15c) which corresponds to the histogram 31 and stored in the conditional format data storage area 15d as shown in FIG. 7 (step B3).

Likewise, the histogram elements of the histogram 31 displayed in the histogram display screen GH are selected one by one to change the colors of the selected histogram elements, and the changed colors can be added to the conditional format data (15d) of the list data (15c) which corresponds to the histogram 31.

After that, if the user operates the EXIT key 12h provided in the key input section 12 (Yes in step S11), the whole process in the spreadsheet mode is completed.

Therefore, according to the histogram display function in the spreadsheet mode in the graphing scientific calculator 10 having the above-described configuration, if a conditional format for setting the condition of a display format of spreadsheet data stored in the list data storage area 15c is stored in the conditional format data storage area 15d, the spreadsheet data is displayed in the display mode corresponding to the condition (the ranges of cells, the ranges of numerical values, the colors of numerical values, etc.). If the range of a cell and the starting point and width of a class for list data (15c) are set to display the list data (15c) as a histogram, a histogram 31 of the list data (15c) is generated in accordance with the settings and displayed in the display section 13 as a histogram display screen GH. If the condition of the conditional format set in the list data (15c) corresponds to the histogram 31, the histogram elements 31a, 31b, ... are displayed in the display mode corresponding to the condition (the ranges of numerical values, the colors of numerical values, etc.). If a given histogram element of the currently displayed histogram 31 and its color are designated, the designated histogram element is displayed in the designated color, and a condition for the display format which corresponds to the class and color of the histogram element whose color was changed is generated and additionally stored as a conditional format of the list data (15c).

Therefore, a conditional format of list data can be set to correspond to a designated color of a selected element of the histogram.

Accordingly, the correlation between list data and a histogram can be understood visually by the color display mode that corresponds to a conditional format set in the list data. Furthermore, not only the characteristic of a histogram drawn based on the list data can easily be understood, but also a conditional format of the list data can additionally be set in accordance with a user's change in the color of a histogram element of the currently displayed histogram. Thus, the correlation between each of the histogram elements of a histogram to be displayed and each of the items of numerical data of the list data can easily be understood by the change in color of the histogram elements.

Conditional format data is stored in a cell of the list. Therefore, in the above embodiment, the range A1-A50 is copied and pasted to the range B1-B50, with the result that even though column B as shown in FIG. 6 can be used for inputting scores on a test, the cells of column B can be distinguished by color as those of column A.

The operation techniques of the graphing scientific calculator 10 in the above embodiment, such as the whole process in spreadsheet mode shown in the flowchart of FIG. 3, the histogram generation process shown in the flowchart of FIG. 4 and the conditional format data generation process shown in the flowchart of FIG. 5, can be stored as computer-executable programs in a storage medium (recording medium 17) such as a memory card (ROM card and RAM card, for example), a magnetic disk (flexible disk and hard disk, for example), an optical disk (CD-ROM and DVD, for example) and a semiconductor memory and then distributed. The computer (CPU 11) of the graphing scientific calculator 10 can perform the same processes by the techniques by reading the programs stored in the storage medium.

Data of the programs for achieving the above techniques can be transmitted via a communication network (public line) as a program code. The computer (CPU 11) can perform the same processes by the above techniques when a communication device (communication control unit 18) connected to the communication network receives the programs.

## Claims

1. A list data management device **characterized by** comprising:
a histogram display control unit (11, 13, 15a, 15e-15g) (S5, SA, A1-A10, S6) which displays a histogram based on list data;
an element color setting unit (11) (S7-S10) which designates a display element corresponding to a given class from the histogram displayed by the histogram display control unit and sets a display color of the display element; and
a conditional format generating unit (11, 15d) (SB, B1-B3) which generates conditional format data based on the display element and the display color set by the element color setting unit, the conditional format data causing data of the list data, which corresponds to the class of the display element, to be displayed in a display mode using the display color.

2. The list data management device of claim 1, **characterized in that** when the histogram is displayed based on the list data, the histogram display control unit displays a display element corresponding to a class of target data in display color of the target data in accordance with the conditional format data generated by the conditional format generating unit.

3. The list data management device of claim 2, **characterized by** further comprising a list data display control unit which displays the list data, the list data display control unit displaying target data in the list data in a set display mode in accordance with the conditional format data generated by the conditional format generating unit.

4. The list data management device of claim 3, **characterized in that** the element color setting unit includes:
an element color designation unit which designates a display element corresponding to a given class of the histogram displayed by the histogram display control unit and a display color of the display element in accordance with user operation; and
a color change unit which changes the display color of the display element designated by the element color designation unit to a designated display color.

5. The list data management device of claim 4, **characterized in that** the list data includes numerical data, and the conditional format generating unit generates conditional format data for specifying a condition of the numerical data and a display mode of a cell in which the numerical data is stored.

6. A method for managing list data, **characterized by** comprising:
displaying a histogram based on the list data;
designating a display element corresponding to a given class from the displayed histogram and setting a display color of the display element; and
generating conditional format data based on the display element and the display color of the display element and storing the conditional format data in a memory, the conditional format data causing data of the list data, which corresponds to the class of the display element, to be displayed in a display mode using the display color.

7. The method of claim 6, **characterized in that** when the histogram is displayed based on the list data, a display element corresponding to a class of target data is displayed in display color of the target data in accordance with the conditional format data.

8. The method of claim 7, **characterized by** further comprising displaying the list data,
wherein when the list data is displayed, a target data in the list data is displayed in a set display mode in accordance with the conditional format data.

9. The method of claim 8, **characterized in that** the designating a display element and the setting a display color of the display element include:
designating a display element corresponding to a given class of the displayed histogram and a display color of the display element in accordance with user operation; and
changing the display color of the designated display element to a designated display color.

10. The method of claim 9, **characterized in that** the list data includes numerical data, and the conditional format data specifies a condition of the numerical data and a display mode of a cell in which the numerical data is stored.

11. A nontransitory recording medium that stores programs to be executed by an electronic computer including a display section and a memory, the programs including the steps of:
displaying a histogram based on the list data;
designating a display element corresponding to a given class from the displayed histogram and setting a display color of the display element; and
generating conditional format data based on the display element and the display color of the display element and storing the conditional format data in the memory, the conditional format data causing data of the list data, which corresponds to the class of the display element, to be displayed in a display mode using the display color.

12. The nontransitory recording medium of claim 11, **characterized in that** the step of displaying the histogram based on the list data includes displaying a display element corresponding to a class of target data in display color of the target data in accordance with the conditional format data.

13. The nontransitory recording medium of claim 12, **characterized in that** the programs stored in the nontransitory recording medium further includes a step of displaying the list data, and wherein when the list data is displayed, target data in the list data is displayed in a set display mode in accordance with the conditional format data.

14. The nontransitory recording medium of claim 13, **characterized in that** the designating a display element and the setting a display color of the display element include the steps of:
designating a display element corresponding to a given class of the displayed histogram and a display color of the display element in accordance with user operation; and
changing the display color of the designated display element to a designated display color.

15. The nontransitory recording medium of claim 14, **characterized in that** the list data includes numerical data, and
the conditional format data specifies a condition of the numerical data and a display mode of a cell in which the numerical data is stored.
